# FASCICULE DE BREVET EUROPEEN

(11) **EP 3 170 707 B1**
(45) Date de publication et mention de la délivrance du brevet: **19.09.2018**
(21) Numéro de dépôt: 16195295.7
(22) Date de dépôt: 24.10.2016
(51) Int. Cl.: B60S 1/40, B60S 1/38

(54) **CAPUCHON EQUIPANT UN CONNECTEUR POUR UN BALAI D'ESSUYAGE D'UN VEHICULE AUTOMOBILE**
KAPPE AUF EINEM ANSCHLUSSSTÜCK FÜR EINEN SCHEIBENWISCHER EINES KRAFTFAHRZEUGS
COVER EQUIPPING A CONNECTOR FOR A MOTOR VEHICLE WIPER

(30) Priorité: 17.11.2015 FR 1561073
(43) Date de publication de la demande: 24.05.2017
(73) Titulaire: Valeo Systèmes d'Essuyage, 78322 Le Mesnil Saint Denis (FR)
(72) Inventeur: POTON, Eric, 63430 Pont du Château (FR); Houssat, Stéphane, 63112 BLANZAT (FR); GAUCHER, Vincent, 63720 ENNEZAT (FR)
(74) Mandataire: Vincent, Catherine Marie Marguerite

(56) Documents cités:
- EP-B1- 2 229 301
- DE-U1- 20 122 773

## Description

La présente invention se rapporte aux systèmes d'essuyage pour véhicules automobiles, et concerne plus particulièrement un dispositif d'assemblage utilisé pour connecter un balai d'essuyage à un bras d'entraînement de ce dernier.

Les systèmes d'essuyage, couramment dénommés essuie-glaces, pour véhicules automobiles sont conçus pour retirer, par balayage, les liquides et salissures qui peuvent perturber la vision que le conducteur a de son environnement. Ces essuie-glaces comprennent généralement un bras d'entraînement qui effectue un mouvement de va-et-vient angulaire autour d'un axe de rotation, et un balai d'essuyage allongé équipé d'une lame racleuse réalisée en un matériau élastique. En frottant contre une surface vitrée, avant ou arrière, du véhicule automobile, la lame racleuse en balaie l'eau et un certain nombre de salissures, et les évacue en dehors du champ de vision du conducteur.

Quelle que soit la configuration du balai d'essuyage, c'est-à-dire soit un balai d'essuyage comportant des étriers articulés qui retiennent la lame racleuse en plusieurs zones distinctes, soit un balai d'essuyage comportant une lame métallique qui maintient la lame racleuse sur toute sa longueur, le balai d'essuyage est rattaché au bras d'entraînement par un dispositif d'assemblage qui comprend au moins un connecteur monté solidaire du balai d'essuyage.

Dans un premier mode de liaison connu, un adaptateur, apte à être assemblé avec le connecteur du balai d'essuyage, est monté sur une pièce terminale du bras d'entraînement. Ce premier mode de liaison est couramment utilisé pour les essuie-glaces destinés aux surfaces vitrées situées à l'avant du véhicule automobile (pare-brise). Dans un deuxième mode de liaison connu, le connecteur est raccordé à un arbre solidaire du bras d'entraînement. Ce deuxième mode de liaison est couramment rencontré dans les essuie-glaces destinés aux surfaces vitrées situées à l'arrière du véhicule (lunette arrière).

L'état de la technique le plus proche est formé par le document EP2229301 B1 qui décrit un essuie-glace comprenant un capuchon qui est destiné à être rapporté sur le connecteur porteur du balai d'essuyage. L'ensemble formé par le capuchon et le connecteur est agencé pour recevoir l'arbre du bras d'entraînement dans une position d'ouverture du capuchon. Puis, le capuchon est mu par translation entre la position d'ouverture et une position de fermeture.

A cet effet, le capuchon comprend une lumière pour réceptionner l'arbre et pour autoriser le mouvement en translation du capuchon. La lumière est conformée en un coude comportant une première partie pour l'introduction de l'arbre à l'intérieur de la lumière et une deuxième partie pour permettre la translation du capuchon sur l'arbre et le connecteur, la première partie étant ménagée orthogonalement à la deuxième partie.

Se pose le problème général de l'assemblage entre eux du connecteur, de l'arbre et du capuchon qui doit être ergonomique, rapide, robuste, efficace et pérenne, ce que ne permet pas le capuchon décrit par le document EP2229301 B1. En effet, il est nécessaire de pré-assembler le capuchon sur le connecteur, avant d'introduire l'arbre dans la lumière. Une telle opération de pré-assemblage impose des manipulations qui, pour des raisons d'ergonomie et de facilités d'utilisation, doivent être évitées.

Un problème particulier réside notamment en la conformation en coude de la lumière qui présente des inconvénients pour la mise en place de l'arbre à l'intérieur de cette dernière.

La présente invention a pour but d'améliorer cette situation en proposant un capuchon dont la mise en place sur un arbre d'un bras d'entraînement est rapide, une liaison mécanique entre le capuchon et/ou le bras d'entraînement et/ou un connecteur étant simple à mettre en oeuvre, robuste, efficace et pérenne.

Dans ce but, l'invention a pour objet un capuchon destiné à verrouiller un arbre solidaire d'un bras d'entraînement et un connecteur porteur d'un balai d'essuyage, le capuchon s'étendant selon un axe principal longitudinal et comportant au moins deux flancs longitudinaux, chaque flanc longitudinal étant pourvu d'une lumière débouchante délimitée à une première extrémité longitudinale par un fond et à une deuxième extrémité longitudinale par une ouverture pour la réception de l'arbre.

Selon la présente invention, ladite ouverte est ménagée en vis-à-vis dudit fond. En d'autres termes, la lumière débouchante est rectiligne au moins entre un fond et une ouverture délimitant la lumière débouchante. On notera que la direction rectiligne que suit la lumière débouchante s'étend selon un axe longitudinal du capuchon. On évite de cette façon la conformation en coude de la lumière de l'art antérieur et l'assemblage du capuchon sur le bras s'en trouve facilité.

Le capuchon présente l'une quelconque au moins des caractéristiques suivantes, prises seules ou en combinaison :
- la périphérie de chaque lumière débouchante présente une forme générale sensiblement en « U »,
- la lumière débouchante comprend une première portion qui est conformée en un parallélogramme et une deuxième portion qui est conformée en un demi-cercle, ces deux portions étant immédiatement contigües,
- la première portion comporte une ouverture qui est ménagée à travers un bord vertical du flanc longitudinal, ouverture par laquelle l'arbre est apte à être introduit dans la lumière débouchante quand le capuchon est rapporté sur le système d'essuyage,
- le capuchon comprend un capot délimitant un volume interne qui loge les flancs longitudinaux,
- le capot comprend un couvercle bordé au moins de deux ailes latérales,
- le capuchon délimite un espace entre une aile latérale et un flanc longitudinal, l'espace étant destiné à recevoir au moins une partie du bras d'entraînement, notamment après verrouillage du capot sur le connecteur,
- le couvercle s'étend selon un plan globalement perpendiculaire au plan dans lequel s'étend au moins un flanc longitudinal,
- le capuchon comprend une paroi transversale qui s'étend entre les ailes latérales et qui est pourvu d'une languette, cette dernière étant destinée à verrouiller le capuchon sur le connecteur,
- la paroi transversale forme une paroi terminale du capuchon qui délimite le volume interne,
- la languette est pourvue d'un rebord transversal qui émerge de la languette. Un tel rebord forme par exemple une dent d'accrochage qui s'étend dans le volume interne du capuchon,
- le capuchon est équipé de moyens de fixation du capuchon sur un dispositif formé par l'arbre et le connecteur, les moyens de fixation comprenant la lumière débouchante pour la réception de l'arbre et un rebord transversal pour sa mise en prise contre une nervure du connecteur.

L'invention porte aussi sur un ensemble formé par le connecteur pourvu d'au moins un palier de réception d'un arbre, par l'arbre équipant un bras d'entraînement et par un tel capuchon.

L'invention porte encore sur un balai d'essuyage équipé d'un capuchon tel que décrit dans le présent document.

L'invention porte aussi sur système d'essuyage comprenant un bras d'entraînement pourvu d'un arbre et un tel balai d'essuyage.

L'invention porte aussi sur procédé d'assemblage d'un tel ensemble, où :
- une première étape consiste à assembler le connecteur et l'arbre du bras d'entraînement, à partir d'un encastrement de l'arbre à l'intérieur d'au moins un palier de réception, et par exemple d'une encoche de guidage du connecteur,
- une deuxième étape consiste à mettre en position l'arbre à l'intérieur de la lumière débouchante à partir d'un mouvement de translation,
- une troisième étape consiste à translater le capuchon par rapport au connecteur jusqu'à ce qu'un rebord transversal du capuchon soit en prise sur une nervure du connecteur de sorte à solidariser l'ensemble.

Ces dispositions sont telles que la mise en place du balai d'essuyage sur le bras d'entraînement est facilitée. Le verrouillage de cette liaison étant opéré par un capuchon rapporté, celui-ci ne gêne pas l'introduction de l'arbre dans le ou les paliers du connecteur. La liaison mécanique entre le capuchon et/ou le bras d'entraînement et/ou un connecteur est également plus robuste, efficace et pérenne.

D'autres caractéristiques, détails et avantages de l'invention ressortiront plus clairement à la lecture de la description donnée ci-après, à titre indicatif, en relation avec les figures suivantes :
- la figure 1 est une vue schématique en perspective d'un système d'essuyage selon l'invention,
- la figure 2 est une vue en perspective d'une coupe médiane et longitudinale d'un connecteur selon l'invention qui participe du système d'essuyage illustré sur la figure 1,
- la figure 3 est une vue en perspective d'un capuchon selon l'invention qui participe du système d'essuyage illustré sur la figure 1,
- la figure 4 est une vue en perspective d'une coupe médiane et longitudinale du capuchon illustré sur la figure 3 assemblé au connecteur illustré sur la figure 2.

Il faut tout d'abord noter que les figures exposent l'invention de manière détaillée pour sa mise en oeuvre, et que ces figures peuvent également servir à mieux définir l'invention le cas échéant.

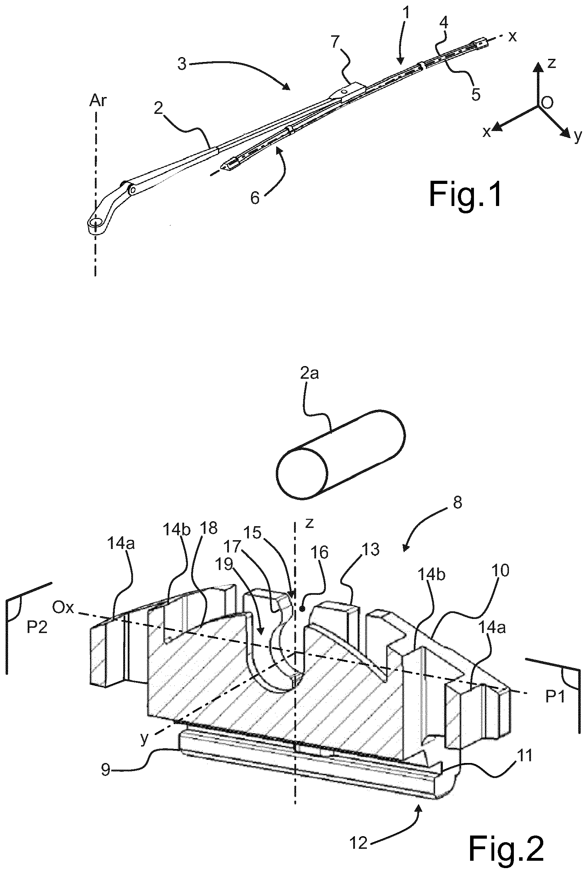

Sur les figures, les dénominations longitudinale, latérale, transversale, verticale, dessus, dessous, se réfèrent à l'orientation d'un balai d'essuyage 1 illustré sur la figure 1. Une direction longitudinale correspond à l'axe principal du balai d'essuyage 1 selon lequel ce dernier s'étend. Cet axe principal est parallèle à un axe longitudinal X le long duquel s'étend le capuchon 20 objet de l'invention. Une direction transversale correspond à celle d'un axe transversal Y qui est perpendiculaire à l'axe longitudinal X du capuchon 20 et perpendiculaire à un axe de rotation Aᵣ d'un bras d'entraînement 2 constitutif d'un système d'essuyage 3. Une direction verticale, parallèle à celle d'un axe vertical Z, et les dénominations supérieure ou inférieure se rapportent à des orientations parallèles à l'axe de rotation Aᵣ du bras d'entraînement 2 du système d'essuyage 3, la dénomination inférieure contenant le plan du pare-brise.

Les directions évoquées ci-dessus sont illustrées dans un repère orthonormé Oxyz représenté sur les figures. Dans ce repère, l'axe Ox représente la direction longitudinale, l'axe Oy représente la direction transversale, et l'axe Oz représente la direction verticale.

Sur la figure 1, un véhicule automobile est couramment équipé du système d'essuyage 3 pour évacuer une eau et/ou des salissures présentes sur une surface vitrée, notamment une lunette arrière du véhicule automobile. Le système d'essuyage 3 comprend un bras d'entraînement 2 qui est apte à effectuer un mouvement de va-et-vient angulaire le long et au-dessus de la surface vitrée. La surface vitrée est indifféremment un pare-brise avant ou une lunette arrière équipant le véhicule automobile.

Le système d'essuyage 3 comprend aussi un balai d'essuyage 1 qui s'étend selon un axe principal, dit axe longitudinal parallèle à l'axe Ox. Le balai d'essuyage 1 comprend au moins un déflecteur d'air 4 et une lame racleuse 5. Le déflecteur d'air 4 est prévu pour transformer une pression appliquée par un flux d'air circulant le long de la surface vitrée en une force d'appui du balai d'essuyage 1 contre la surface vitrée du véhicule automobile. La lame racleuse 5 est la pièce du balai d'essuyage 1 en contact direct avec la surface vitrée pour évacuer l'eau et/ou les salissures présentes sur ce dernier. Le déflecteur d'air 4 et la lame racleuse 5 forment un ensemble semi-rigide 6 qui est porté par un dispositif de connexion 7, interposé entre le bras d'entraînement 2 et l'ensemble semi-rigide 6.

Le dispositif de connexion 7 assure une liaison mécanique entre le bras d'entraînement 2 et le balai d'essuyage 1 et permet ainsi de séparer le balai d'essuyage 1 du bras d'entraînement 2, en vue d'un remplacement du balai d'essuyage 1.

En se reportant maintenant à la figure 2, le dispositif de connexion 7 comprend par exemple un connecteur 8 représenté selon une coupe longitudinale médiane, le long de l'axe longitudinal Ox du balai d'essuyage. Le connecteur 8 comprend une embase 9, qui s'étend selon les directions longitudinale et transversale, et un corps 10 qui s'étend, au-dessus de l'embase 9, sensiblement selon la direction verticale. Selon le mode de réalisation préféré représenté sur les figures, le connecteur 8, pris dans son ensemble, présente un premier plan de symétrie **P**₁, longitudinal et vertical, parallèle au plan Oxz du repère orthonormé défini plus haut, et sensiblement médian selon la direction transversale. Selon un mode de réalisation préféré de l'invention, le connecteur 8 est réalisé par moulage d'un matériau polymère, par exemple un matériau de la famille des Polyoxyméthylènes, connue sous l'acronyme POM, ou par moulage d'un mélange de matériaux polymères, par exemple un mélange de polymères de la famille des polycarbonates et de la famille des Acrylonitrile Butadiène Styrène, connue sous l'acronyme ABS. D'autres matériaux connus de l'homme du métier comme le PBT 30GF peuvent également être utilisés.

L'embase 9 comporte des moyens de solidarisation du connecteur 8 au balai d'essuyage 1. Ces moyens de solidarisation prennent la forme d'une première et d'une deuxième gorge 11 ménagées dans les parties latérales inférieures de l'embase 9, dont chacune délimite, en partie inférieure latérale de cette embase 9, un crochet 12 apte à venir en prise sur le balai d'essuyage 1. Seule une gorge 11 est représentée sur la figure 1, la deuxième gorge étant ménagée sur la partie symétrique de l'embase 9 par rapport au premier plan de symétrie **P**₁, longitudinal vertical, du connecteur 8.

Le corps 10, avantageusement issu de matière avec l'embase 9, s'étend au-dessus de cette dernière selon la direction verticale. Le corps 10 présente une dimension selon la direction transversale sensiblement inférieure à la dimension transversale de l'embase 9, et une dimension longitudinale sensiblement égale ou supérieure à la dimension longitudinale de l'embase 9. Selon le mode de réalisation de l'invention illustré sur les figures, la dimension longitudinale du corps 10 est supérieure à celle de l'embase 9, et le connecteur 8 présente un second plan de symétrie **P**₂, transversal et vertical, parallèle au plan Oyz du repère orthonormé défini plus haut et sensiblement médian selon l'axe longitudinal Ox.

Symétriquement disposés par rapport au premier plan de symétrie P₁ du connecteur 8, le corps 10 comporte des premier et deuxième flancs latéraux 13, sensiblement verticaux. Seul un premier flanc latéral 13 est représenté sur la figure 2, le deuxième flanc latéral étant ménagé sur la partie symétrique de l'embase 9 par rapport au premier plan de symétrie P₁ du connecteur 8. Chacun de ces flancs latéraux 13 est sensiblement plan, de faible épaisseur selon la direction transversale, et la distance entre les faces externes de ces deux flancs latéraux 13 représente la dimension, selon la direction transversale, du corps 10 du connecteur 8. Les premier et deuxième flancs latéraux 13 délimitent ainsi, entre eux, un volume intérieur du connecteur 8. Vers les extrémités longitudinales du corps 10, les premier et deuxième flancs latéraux 13 sont reliés entre eux par un ensemble de nervures 14a, 14b, qui jouent notamment un rôle de renfort du corps 10. Plus particulièrement, le connecteur 8 comporte un couple de nervures externes 14a et un couple de nervures internes 14b. Les nervures externes 14a d'une part et les nervures internes 14b d'autre part sont ménagés symétriquement par rapport à un plan médian transversal du connecteur, ce plan médian étant parallèle au second plan de symétrie P₂. Ainsi, d'une extrémité longitudinale du connecteur 8 à l'autre extrémité longitudinale du connecteur 8, le connecteur 8 comprend une première rainure externe 14a, une première rainure interne 14b, une deuxième rainure interne 14a et une deuxième rainure externe 14b.

Comme le montre la figure 2, chacun des premier et deuxième flancs latéraux 13 présente sensiblement, vu de côté, un profil tel que la surface supérieure de chacun de ces flancs latéraux 13, en sa partie centrale selon la direction longitudinale du connecteur 8, forme une pente descendante en direction de chacune de leurs extrémités longitudinales. Cette forme permet à la fois d'alléger le connecteur 8, et de faciliter son assemblage avec un capuchon selon l'invention dont la description est à venir ou avec le bras d'entraînement 2.

A travers chacun du premier et du deuxième flanc latéral 13 est ménagé un palier de réception 15 d'un arbre 2a solidaire du bras d'entraînement 2 du système d'essuyage 3.Le connecteur 8 est destiné à être lié au bras 2a lors d'une première étape d'un procédé d'assemblage de l'invention qui est décrit ci-après.

Un premier palier de réception 15 est ainsi ménagé dans le premier flanc latéral 13, et un deuxième palier de réception peut être ménagé dans le deuxième flanc latéral. Chacun des paliers de réception 15 a une forme sensiblement cylindrique et est traversant, c'est-à-dire qu'il s'étend transversalement sur toute l'épaisseur de chacun des flancs latéraux 13. Le diamètre intérieur de chacun des paliers de réception 15 est défini par rapport à un diamètre moyen de l'arbre 2a solidaire du bras d'entraînement 2 auquel le connecteur 8 est destiné à être connecté. Les centres des deux paliers de réception 15 respectivement agencés dans le premier flanc latéral 13 et dans le deuxième flanc latéral sont alignés selon l'axe transversal Y parallèle à la direction de l'axe Oy du repère orthonormé défini plus haut. L'axe transversal Y matérialise l'axe de rotation du balai d'essuyage 1 par rapport au bras d'entraînement 2, une fois que l'arbre 2a est accueilli à l'intérieur des paliers de réception 15 du connecteur 8.

Chacun des paliers de réception 15 est placé sensiblement, selon la direction longitudinale, dans la zone centrale du flanc latéral correspondant. Selon le mode de réalisation illustré sur les figures, l'axe transversal Y selon lequel les centres de ces paliers de réception 15 sont alignés est donc compris à l'intérieur du deuxième plan de symétrie P₂, transversal vertical, du connecteur 8. Selon la direction verticale, chacun des paliers de réception 15 s'étend avantageusement sensiblement en zone centrale du corps 10 du connecteur 8. Chacun de ces paliers de réception 15 est donc agencé, sur l'un ou l'autre des premier ou deuxième flancs latéraux 13, de telle manière que, d'une part, il subsiste de la matière du flanc latéral 13 correspondant au-dessus du palier de réception 15, et de telle manière que, d'autre part, il subsiste de la matière du flanc latéral 13 correspondant au-dessous dudit palier de réception 15, entre son point le plus bas et la face supérieure de l'embase 9 du connecteur 8.

Pour permettre l'accueil et le maintien de l'arbre 2a solidaire du bras d'entraînement 2 dans le connecteur 8, c'est-à-dire, par exemple simultanément dans les paliers de réception 15, respectivement agencés dans le premier et dans le deuxième flancs latéraux 13, une ouverture d'entrée 16 est ménagée au droit de chacun de ces paliers de réception 15, au-dessus de ces derniers. La dimension longitudinale de chacune des ouvertures d'entrée 16 est inférieure au diamètre intérieur du palier de réception 15 auquel l'ouverture d'entrée 16 donne accès, et dans lequel l'ouverture d'entrée 16 débouche. En d'autres termes, chaque ouverture d'entrée 16 forme un cône d'accès au palier de réception 15 correspondant. Une première ouverture d'entrée 16 forme ainsi un cône d'accès au premier palier de réception 15 agencé dans le premier flanc latéral 13, et une deuxième ouverture d'entrée forme un cône d'accès au deuxième palier de réception agencé dans le deuxième flanc latéral. Ainsi, lorsque l'arbre 2a solidaire d'un bras d'entraînement 2 du système d'essuyage 3 est accueilli simultanément dans les paliers de réception 15, ledit arbre 2a y est ensuite maintenu selon la direction verticale Oz. Afin de faciliter l'insertion de l'arbre 2a dans les ouvertures d'entrée 16, et la mise en place de cet arbre 2a dans les paliers de réception 15, des chanfreins 17 sont formés sur chacune des arêtes d'entrée bordant chacune des ouvertures d'entrée 16. La plus petite dimension longitudinale de l'ouverture d'entrée 16 est strictement inférieure au diamètre de l'arbre 2a.

Le corps 10 du connecteur 8 comporte en outre, au sein du volume intérieur délimité par les premier et deuxième flancs latéraux 13, une joue de guidage 18 qui s'étend sensiblement longitudinalement et verticalement, à partir de la face supérieure de l'embase 9. Selon le mode de réalisation illustré par les figures, la joue de guidage 18 est placée, selon la direction transversale, sensiblement en partie médiane du volume intérieur délimité par les deux flancs latéraux 13. Elle s'étend donc ici sensiblement selon le premier plan de symétrie P₁, longitudinal vertical, du connecteur 8.

La joue de guidage 18 est également avantageusement placée en situation sensiblement centrale selon la direction longitudinale du connecteur 8. Avantageusement, le profil de la surface supérieure de la joue de guidage 18 est sensiblement similaire à celui d'au moins un des premier et/ou deuxième flancs latéraux 13. Selon un mode de réalisation préféré de l'invention, la dimension de la joue de guidage 18 selon la direction verticale est toutefois inférieure à celle de chacun des flancs latéraux 13, mesurée en leur partie centrale selon l'axe longitudinal Ox.

Sensiblement en partie centrale selon la direction longitudinale, une encoche de guidage 19 est ménagée en partie supérieure de la joue de guidage 18. Cette encoche de guidage 19 débouche à la surface supérieure de la joue de guidage 18. Plus précisément, l'encoche de guidage 19 est agencée de telle manière qu'elle forme, en sa partie inférieure, sensiblement un demi-cylindre centré sur l'axe transversal Y, et dont le diamètre est supérieur à celui desdits paliers de réception 15. Selon le mode de réalisation illustré sur les figures, cette partie demi-cylindrique se prolonge verticalement, vers la surface supérieure de la joue de guidage 18, sur une dimension longitudinale sensiblement égale à son diamètre. Selon d'autres modes de réalisation alternatifs, l'encoche de guidage 19 peut présenter, en direction de la surface supérieure de la joue de guidage 18, un léger évasement.

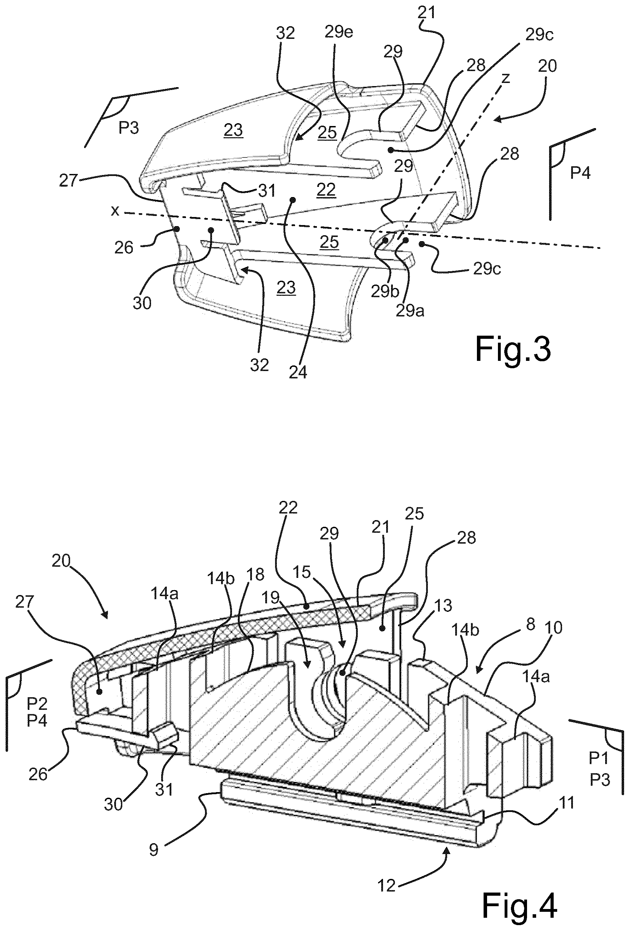

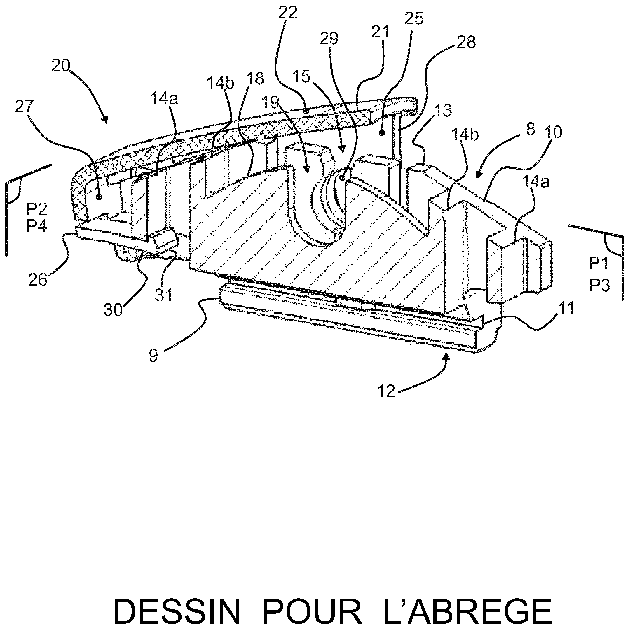

Sur la figure 3, est représenté un capuchon 20 dont la fonction est de verrouiller et de protéger le connecteur 8 sur le bras d'entraînement 2, et ainsi participer à la liaison pivot qui prend place entre le balai d'essuyage et le bras d'entraînement. Le capuchon 20 s'étend dans sa longueur selon un axe longitudinal X, qui lorsque le capuchon 20 est monté sur le balai d'essuyage, est parallèle à l'axe principal du balai d'essuyage 1.

Le capuchon 20 comprend un capot 21 formé par un couvercle 22 bordé par deux ailes latérales 23. Les ailes latérales 23 sont ménagées parallèlement entre elles et parallèlement à l'axe longitudinal X et s'étendent sensiblement à l'intérieur d'un troisième plan de symétrie P₃. Le couvercle 22 s'étend quant à lui à l'intérieur d'un plan orthogonal au troisième plan de symétrie P₃ et à un quatrième plan de symétrie P₄. Selon une coupe effectuée dans le quatrième plan de symétrie P₄, le capot 21 est conformé en « U » dont la base est formée par le couvercle 22 et les branches sont formées par les ailes latérales 23. Le capot 21 délimite entre le couvercle 22 et les ailes latérales 23 un volume interne 24 qui loge au moins deux flancs longitudinaux 25 parallèles entre eux et sensiblement parallèles aux ailes latérales 23. Une distance mesurée selon une direction transversale sépare chaque flanc longitudinal 25. Une autre distance mesurée selon cette direction transversale sépare une aile latérale 23 du flanc longitudinal qui lui est adjacent. Cette autre distance ménage un espace 32 qui est destiné à recevoir une partie terminale du bras d'entraînement, notamment une partie terminale dont la section forme un « U ».

Les flancs longitudinaux 25 sont solidaires d'une face interne du couvercle 22 et d'un rabat 26. Le rabat 26 s'étend à l'intérieur du volume interne 24 en étant solidaire d'une paroi transversale 27 qui est ménagée de l'une à l'autre des ailes latérales 23. Cette paroi transversale 27 forme ainsi une paroi longitudinale terminale du capuchon 20. Le rabat 26 est ménagé selon un plan qui est sensiblement orthogonal au troisième plan de symétrie P₃ et au quatrième plan de symétrie P₄. Chaque flanc longitudinal 25 est terminé par un bord vertical 28 qui est disposé à l'opposé de la paroi transversale 27, par rapport au flanc longitudinal 25.

Chaque bord vertical 28 s'étend globalement parallèlement à l'axe vertical Z. Chaque flanc longitudinal 25 est pourvu d'une lumière débouchante 29 qui s'étend selon l'axe longitudinal X du capuchon. La lumière débouchante est prévue pour recevoir l'arbre 2a du bras d'entraînement 2. Cette lumière 29 prend la forme d'une découpe ménagée dans le flanc longitudinal concerné. Elle est débouchante en ce sens qu'elle s'ouvre vers l'environnement extérieur du capuchon 20.

La lumière débouchante 29 est rectiligne et s'étend par exemple orthogonalement au bord vertical 28. Le caractère rectiligne de la lumière est reconnaissable en ce sens que cette lumière prend une forme oblongue et s'étend selon une unique direction linéaire. Cette lumière débouchante 29 est ainsi délimitée à une première extrémité longitudinale par une ouverture 29c, et à une seconde extrémité longitudinale, par un fond 29e. Ce dernier est formé par une tranche du flanc longitudinal 25 qui délimite la lumière débouchante 29.

De manière plus détaillée, la lumière débouchante 29 comprend une première portion 29a qui est conformée en un parallélogramme et une deuxième portion 29b, adjacente à la première portion 29a, qui est conformée en un demi-cercle. La première portion 29a est terminée par l'ouverture 29c qui est ménagée au niveau du bord vertical 28. La première portion 29a et la deuxième portion 29b sont ménagées dans le prolongement l'une de l'autre, l'une présentant un forme rectangulaire tandis que l'autre présente une forme en demi-cercle. Ces dispositions sont telles qu'à partir d'un mouvement de translation rectiligne, l'arbre 2a est aisément encastrable à l'intérieur de la lumière débouchante 29. Le mouvement rectiligne s'effectue successivement en franchissant l'ouverture 29c, en traversant la première portion 29a pour atteindre la deuxième portion 29b à l'intérieur de laquelle l'arbre 2a est prévu de se loger au moins partiellement, en butée contre le fond 29e.

Le capuchon 20, notamment le rabat 26, est pourvu d'une languette 30 qui s'étend dans le prolongement du rabat 26 et dont l'extrémité est équipée d'un rebord transversal 31. Un tel rebord transversal 31 forme une dent destiné à venir en prise sur une arête du connecteur. La languette 30 est d'une conformation plane et d'une épaisseur, prise selon l'axe vertical Z, qui lui confère une certaine souplesse. Autrement dit, la languette 30 est basculante sur le rabat 26. Le rebord transversal 31 est d'une épaisseur, prise selon l'axe vertical Z, qui est supérieure à celle de la languette 30. Autrement dit, le rebord transversal 31 émerge au-dessus de la languette 30, c'est-à-dire vers le volume interne 24.

Sur la figure 4, qui représente le capuchon 20 assemblé au connecteur 8, l'arbre 2a étant omis pour une meilleure lisibilité de la figure, la lumière débouchante 29 et le rebord transversal 31 forment un moyen de fixation 29, 31 du capuchon 20 sur un dispositif constitué de l'arbre 2a et du connecteur 8. Le rebord transversal 31 est en prise sur l'une des nervures 14a formées sur le connecteur 8, avantageusement une des deux nervures interne. On notera d'ailleurs que le capuchon 20 peut être installé à l'une ou l'autre des extrémités longitudinales du connecteur 8, le rebord transversal 31 venant en prise avec la nervure 14a correspondante.

Le moyen de fixation participe d'un moyen de verrouillage du balai d'essuyage 1 sur le bras d'entraînement 2 à partir de la mise en oeuvre du procédé d'assemblage de la présente invention qui comprend une pluralité d'étapes successives. La fixation pivotante du balai d'essuyage sur le bras d'entraînement arbre 2a est opérée par la coopération de l'arbre 2a dans le ou les paliers de réception 15 ménagés dans le connecteur 8.

Une première étape du procédé d'assemblage consiste à assembler le connecteur 8 et l'arbre 2a du bras d'entraînement 2, à partir d'un encastrement de l'arbre 2a à l'intérieur des paliers de réception 15, et avantageusement de l'encoche de guidage 19 du connecteur 8. A ce stade, la liaison pivotante entre le balai d'essuyage et le bras d'entraînement est complète.

Une deuxième étape du procédé d'assemblage consiste à mettre en position l'arbre 2a à l'intérieur de la ou des lumières débouchantes 29. Dit autrement, le capuchon 20 est approché du connecteur 8 et les lumières débouchantes 29 sont insérées sur l'arbre 2a, en suivant un mouvement de translation le long de l'axe longitudinal X du capuchon 20.

Une troisième étape du procédé d'assemblage consiste à poursuivre la translation du capuchon 20 sur le connecteur 8 jusqu'à ce que le rebord transversal 31 vienne en prise contre une face interne de la nervure externe 14a du connecteur 8. Une fois en butée, le capuchon 20 immobilise un ensemble 2a, 8, 20 formé par l'arbre 2a, le connecteur 8 et le capuchon 20.

## Revendications

1. Capuchon (20) destiné à verrouiller un arbre (2a) solidaire d'un bras d'entraînement et un connecteur (8) porteur d'un balai d'essuyage (1), le capuchon (20) s'étendant selon un axe principal longitudinal (X) et comportant au moins deux flancs longitudinaux (25), chaque flanc longitudinal (25) étant pourvu d'une lumière débouchante (29) délimitée à une première extrémité longitudinale par un fond (29e) et à une deuxième extrémité longitudinale par une ouverture (29c) pour la réception de l'arbre (2a), ledit capuchon (20) étant **caractérisé en en ce que** ladite ouverte (29c) est ménagée en vis-à-vis dudit fond (29e).

2. Capuchon (20) selon la revendication 1, dans lequel la périphérie de chaque lumière débouchante (29) présente une forme générale sensiblement en « U ».

3. Capuchon (20) selon la revendication 1 ou 2, dans lequel la lumière débouchante (29) comprend une première portion (29a) qui est conformée en un parallélogramme et une deuxième portion (29b) qui est conformée en un demi-cercle.

4. Capuchon (20) selon la revendication 3, dans lequel l'ouverture (29c) est ménagée à travers un bord (28) délimitant le flanc longitudinal (25).

5. Capuchon (20) selon l'une quelconque des revendications précédentes, dans lequel le capuchon (20) comprend un capot (21) délimitant un volume interne (24) qui loge les flancs longitudinaux (25).

6. Capuchon (20) selon la revendication 5, dans lequel le capot (21) comprend un couvercle (22) bordé de deux ailes latérales (23).

7. Capuchon (20) selon la revendication 6, dans lequel est ménagé au moins un espace (32) entre une aile latérale (23) et un flanc longitudinal (25) destiné à recevoir au moins une partie du bras d'entraînement.

8. Capuchon (20) selon la revendication 7, dans lequel le couvercle (22) s'étend sensiblement perpendiculairement aux flancs longitudinaux (25).

9. Capuchon (20) selon l'une quelconque des revendications 7 et 8, dans lequel le capuchon (20) comprend une paroi transversale (27) qui s'étend entre les ailes latérales (23) et qui est pourvu d'une languette (30).

10. Capuchon (20) selon la revendication 9, dans lequel la languette (30) est pourvue d'un rebord transversal (31) qui émerge de la languette (30).

11. Capuchon (20) selon l'une quelconque des revendications précédentes, dans lequel le capuchon (20) est équipé de moyens de fixation (29, 31) du capuchon (20) sur un dispositif (2a, 8) formé par l'arbre (2a) et par le connecteur (8), les moyens de fixation comprenant la lumière débouchante (29) pour la réception de l'arbre (2a) et un rebord transversal (31) pour sa mise en contact contre une nervure (14a) du connecteur (8).

12. Ensemble (2a, 8, 20) formé par le connecteur (8) pourvu d'au moins un palier de réception (15) d'un arbre (2a), par l'arbre (2a) équipant un bras d'entraînement (2) et par un capuchon (20) selon l'une quelconque des revendications précédentes.

13. Balai d'essuyage (1) comprenant au moins un connecteur (8) solidaire du balai et un capuchon (20) selon l'une quelconque des revendications 1 à 11.

14. Système d'essuyage (3) comprenant un bras d'entraînement (2) pourvu d'un arbre (2a) et un balai d'essuyage (1) selon la revendication 13.

15. Procédé d'assemblage de l'ensemble (2a, 8, 20) selon la revendication 12, où au moins :
- une première étape consiste à assembler le connecteur (8) et l'arbre (2a) du bras d'entraînement (2), à partir d'un encastrement de l'arbre (2a) à l'intérieur d'au moins un palier de réception (15),
- une deuxième étape consiste à mettre en position l'arbre (2a) à l'intérieur de la lumière débouchante (29) du capuchon (20),
- une troisième étape consiste à translater le capuchon (20) par rapport au connecteur (8) jusqu'à ce qu'un rebord transversal (31) du capuchon soit en prise sur une nervure (14a) du connecteur (8) de sorte à solidariser l'ensemble (2a, 8, 20).

## Patentansprüche

1. Kappe (20), welche dazu bestimmt ist, eine Welle (2a), die mit einem Antriebsarm fest verbunden ist, und ein Anschlussstück (8), das ein Scheibenwischerblatt (1) trägt, zu verriegeln, wobei sich die Kappe (20) entlang einer Längshauptachse (X) erstreckt und wenigstens zwei Längsflanken (25) aufweist, wobei jede Längsflanke (25) mit einem in den Rand mündenden Schlitz (29) versehen ist, der an einem ersten Längsende von einem Boden (29e) und an einem zweiten Längsende von einer Öffnung (29c) für die Aufnahme der Welle (2a) begrenzt wird, wobei die Kappe (20) **dadurch gekennzeichnet ist, dass** die Öffnung (29c) gegenüber dem Boden (29e) ausgebildet ist.

2. Kappe (20) nach Anspruch 1, wobei der Umfang jedes in den Rand mündenden Schlitzes (29) eine allgemeine Form aufweist, die im Wesentlichen eine U-Form ist.

3. Kappe (20) nach Anspruch 1 oder 2, wobei der in den Rand mündende Schlitz (29) einen ersten Abschnitt (29a), welcher parallelogrammförmig ausgebildet ist, und einen zweiten Abschnitt (29b), welcher halbkreisförmig ausgebildet ist, umfasst.

4. Kappe (20) nach Anspruch 3, wobei die Öffnung (29c) durch einen Rand (28) hindurch ausgebildet ist, der die Längsflanke (25) begrenzt.

5. Kappe (20) nach einem der vorhergehenden Ansprüche, wobei die Kappe (20) eine Haube (21) umfasst, die ein Innenvolumen (24) begrenzt, welches die Längsflanken (25) aufnimmt.

6. Kappe (20) nach Anspruch 5, wobei die Haube (21) eine Abdeckung (22) umfasst, die von zwei seitlichen Flügeln (23) umrandet wird.

7. Kappe (20) nach Anspruch 6, wobei wenigstens ein Raum (32) zwischen einem seitlichen Flügel (23) und einer Längsflanke (25) ausgebildet ist, der dazu bestimmt ist, wenigstens einen Teil des Antriebsarmes aufzunehmen.

8. Kappe (20) nach Anspruch 7, wobei sich die Abdeckung (22) im Wesentlichen senkrecht zu den Längsflanken (25) erstreckt.

9. Kappe (20) nach einem der Ansprüche 7 und 8, wobei die Kappe (20) eine Querwand (27) umfasst, welche sich zwischen den seitlichen Flügeln (23) erstreckt und welche mit einer Zunge (30) versehen ist.

10. Kappe (20) nach Anspruch 9, wobei die Zunge (30) mit einem Querrand (31) versehen ist, der aus der Zunge (30) herausragt.

11. Kappe (20) nach einem der vorhergehenden Ansprüche, wobei die Kappe (20) mit Mitteln zur Befestigung (29, 31) der Kappe (20) auf einer Vorrichtung (2a, 8), die von der Welle (2a) und von dem Anschlussstück (8) gebildet wird, ausgestattet ist, wobei die Befestigungsmittel den in den Rand mündenden Schlitz (29) für die Aufnahme der Welle (2a) und einen Querrand (31) zum Inkontaktbringen der Kappe mit einer Rippe (14a) des Anschlussstücks (8) umfassen.

12. Anordnung (2a, 8, 20), die von dem Anschlussstück (8), das mit wenigstens einem Lager zur Aufnahme (15) einer Welle (2a) versehen ist, von der Welle (2a), mit der ein Antriebsarm (2) ausgestattet ist, und von einer Kappe (20) nach einem der vorhergehenden Ansprüche gebildet wird.

13. Scheibenwischerblatt (1), welches wenigstens ein Anschlussstück (8), das mit dem Wischerblatt fest verbunden ist, und eine Kappe (20) nach einem der Ansprüche 1 bis 11 umfasst.

14. Scheibenwischsystem (3), welches einen Antriebsarm (2), der mit einer Welle (2a) versehen ist, und ein Scheibenwischerblatt (1) nach Anspruch 13 umfasst.

15. Verfahren zum Zusammenbau der Anordnung (2a, 8, 20) nach Anspruch 12, wobei wenigstens:
- ein erster Schritt darin besteht, das Anschlussstück (8) und die Welle (2a) des Antriebsarmes (2) durch Einspannen der Welle (2a) im Inneren wenigstens eines Aufnahmelagers (15) zusammenzubauen,
- ein zweiter Schritt darin besteht, die Welle (2a) im Inneren des in den Rand mündenden Schlitzes (29) der Kappe (20) in Position zu bringen,
- ein dritter Schritt darin besteht, die Kappe (20) bezüglich des Anschlussstücks (8) so weit zu verschieben, bis ein Querrand (31) der Kappe an einer Rippe (14a) des Anschlussstücks (8) so angreift, dass die Anordnung (2a, 8, 20) fest verbunden wird.

## Claims

1. Cover (20) intended to lock a shaft (2a) securely to a driving arm and a connector (8) that carries a wiper (1), the cover (20) extending along a main longitudinal axis (X) and having at least two longitudinal flanks (25), each longitudinal flank (25) having an open slot (29) delimited at a first longitudinal end by an end wall (29e) and at a second longitudinal end by an opening (29c) for receiving the shaft (2a), said cover (20) being **characterized in that** said opening (29c) is formed opposite said end wall (29e).

2. Cover (20) according to Claim 1, wherein the periphery of each open slot (29) has a substantially "U"-shaped overall shape.

3. Cover (20) according to Claim 1 or 2, wherein the open slot (29) comprises a first portion (29a) which is in the shape of a parallelogram and a second portion (29b) which is in the shape of a semicircle.

4. Cover (20) according to Claim 3, wherein the opening (29c) is formed through an edge (28) delimiting the longitudinal flank (25).

5. Cover (20) according to any one of the preceding claims, wherein the cover (20) comprises a shroud (21) delimiting an internal volume (24) which accommodates the longitudinal flanks (25).

6. Cover (20) according to Claim 5, wherein the shroud (21) comprises a top (22) bordered by two lateral flanges (23).

7. Cover (20) according to Claim 6, wherein at least one space (32) is formed between a lateral flange (23) and a longitudinal flank (25) that is intended to receive at least a part of the driving arm.

8. Cover (20) according to Claim 7, wherein the top (22) extends substantially perpendicularly to the longitudinal flanks (25).

9. Cover (20) according to either one of Claims 7 and 8, wherein the cover (20) comprises a transverse wall (27) which extends between the lateral flanges (23) and which is provided with a tab (30).

10. Cover (20) according to Claim 9, wherein the tab (30) is provided with a transverse lip (31) which protrudes from the tab (30).

11. Cover (20) according to any one of the preceding claims, wherein the cover (20) is equipped with means (29, 31) for fastening the cover (20) to a device (2a, 8) formed by the shaft (2a) and by the connector (8), the fastening means comprising the open slot (29) for receiving the shaft (2a) and a transverse lip (31) for bringing it into contact with a rib (14a) on the connector (8).

12. Assembly (2a, 8, 20) formed by the connector (8) provided with at least one receiving bearing (15) for receiving a shaft (2a), by the shaft (2a) equipping a driving arm (2), and by a cover (20) according to any one of the preceding claims.

13. Wiper (1) comprising at least one connector (8) secured to the wiper and a cover (20) according to any one of Claims 1 to 11.

14. Wiping system (3) comprising a driving arm (2) provided with a shaft (2a) and a wiper (1) according to Claim 13.

15. Method for joining together the assembly (2a, 8, 20) according to Claim 12, where at least:
- a first step consists in joining the connector (8) and the shaft (2a) of the driving arm (2) together, by fitting the shaft (2a) into at least one receiving bearing (15),
- a second step consists in positioning the shaft (2a) inside the open slot (29) in the cover (20),
- a third step consists in moving the cover (20) in translation with respect to the connector (8), until a transverse lip (31) of the cover is engaged over a rib (14a) of the connector (8) so as to secure the assembly (2a, 8, 20).
